(19) **Europäisches Patentamt / European Patent Office / Office européen des brevets**

(11) **EP 4 507 055 A1**

(12) **EUROPEAN PATENT APPLICATION**
published in accordance with Art. 153(4) EPC

(43) Date of publication:
**12.02.2025 Bulletin 2025/07**

(21) Application number: **22959902.2**

(22) Date of filing: **28.09.2022**

(51) International Patent Classification (IPC):
**H01M 10/0568** (2010.01)   **H01M 10/0566** (2010.01)
**H01M 10/0567** (2010.01)   **H01M 10/054** (2010.01)

(52) Cooperative Patent Classification (CPC):
**H01M 10/054; H01M 10/0566; H01M 10/0567;
H01M 10/0568;** Y02E 60/10

(86) International application number:
**PCT/CN2022/122033**

(87) International publication number:
**WO 2024/065254 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
(Hong Kong) Limited
Central, Central And Western District (HK)**

(72) Inventors:
• **QIN, Meng
  Ningde City, Fujian 352100 (CN)**

• **GUAN, Yingjie
  Ningde City, Fujian 352100 (CN)**
• **YANG, Huiling
  Ningde City, Fujian 352100 (CN)**
• **ZHAO, Yuzhen
  Ningde City, Fujian 352100 (CN)**
• **WEN, Yan
  Ningde City, Fujian 352100 (CN)**
• **HUANG, Qisen
  Ningde City, Fujian 352100 (CN)**

(74) Representative: **Kraus & Lederer PartGmbB
Thomas-Wimmer-Ring 15
80539 München (DE)**

(54) **ELECTROLYTE, SODIUM ION BATTERY, BATTERY MODULE, BATTERY PACK, AND ELECTRICAL APPARATUS**

(57)   This application provides an electrolyte, a sodium-ion battery, a battery module, a battery pack, and an electric apparatus. The electrolyte includes a sodium salt and an organic solvent. The organic solvent includes a fluorinated organic substance, an ether organic substance, and a coordinating organic substance, where the coordinating organic substance includes a plurality of functional groups capable of coordinating with transition metal. The electrolyte provided in this application can improve cycling performance of sodium-ion batteries in high-temperature environments.

EP 4 507 055 A1

## Description

### TECHNICAL FIELD

This application relates to the field of sodium-ion battery technologies, and in particular, to an electrolyte, a sodium-ion battery, a battery module, a battery pack, and an electric apparatus.

### BACKGROUND

At present, reserves of non-renewable energy resources have become insufficient to support the rapid development of industry, agriculture, and other sectors. This leads to rapid development of new energy sources. Batteries (for example, lithium-ion batteries and sodium-ion batteries) for storing electrical energy have gradually become one of widely used new energy sources.

However, in the related art, cycling performance of sodium-ion batteries deteriorates in high-temperature environments. This severely limits the application of sodium-ion batteries in high-temperature environments.

### SUMMARY

This application provides an electrolyte, a sodium-ion battery, a battery module, a battery pack, and an electric apparatus, where the electrolyte can improve cycling performance of sodium-ion batteries in high-temperature environments.

According to a first aspect, an embodiment of this application provides an electrolyte including a sodium salt and an organic solvent, where the organic solvent includes a fluorinated organic substance, an ether organic substance, and a coordinating organic substance, and the coordinating organic substance includes a plurality of functional groups capable of coordinating with transition metal.

In the electrolyte provided in this embodiment of this application, the fluorinated organic substance and the coordinating organic substance can be together dissolved and collaborate in the ether organic substance under high-temperature environment conditions, so as to produce a stable solid electrolyte interface film on a surface of an electrode. On one hand, the fluorinated organic substance can facilitate formation of a stable solid electrolyte interface film on a surface of an electrode plate to reduce formation of sodium dendrites, thereby improving cycling performance of a sodium-ion battery; and on the other hand, transition metal dissolved from the electrode plate under high-temperature environments can coordinate with the functional groups in the coordinating organic substance to reduce the damage caused by the transition metal to the solid electrolyte interface film, improving stability of the solid electrolyte interface film, and thus further improving stability of the cycling performance of the sodium-ion battery. Therefore, the electrolyte provided in this embodiment of this application can improve the cycling performance of sodium-ion batteries in high-temperature environments.

According to any one of the embodiments of the first aspect of this application, the fluorinated organic substance includes a fluorocarbonate and/or a fluoroether. The fluorocarbonate and the fluoroether can facilitate formation of a solid electrolyte interface film rich in sodium fluoride on the surface of the electrode plate to further improve the stability of the solid electrolyte interface film and effectively reduce formation of sodium dendrites, thus further improving the cycling performance of the sodium-ion battery.

According to any one of the embodiments of the first aspect of this application, the fluorocarbonate includes a linear fluorocarbonate and/or a cyclic fluorocarbonate. The linear fluorocarbonate includes at least one of trifluoromethyl ethyl carbonate, trifluoromethyl propyl carbonate, bis(trifluoromethyl)carbonate, and bis(2,2,2-trifluoroethyl)carbonate. The cyclic fluorocarbonate includes at least one of fluoroethylene carbonate, fluoropropylene carbonate, and fluorobutylene carbonate.

According to any one of the embodiments of the first aspect of this application, the fluoroether includes at least one of 1,1,2,2-tetrafluoroethyl-2,2,2-trifluoroethyl ether, 1,1,2,2-tetrafluoroethyl-2,2,3,3-tetrafluoropropyl ether, bis(2,2,2-trifluoroethyl)ether, methyl nonafluorobutyl ether, and ethyl nonafluorobutyl ether.

According to any one of the embodiments of the first aspect of this application, the ether organic substance includes at least one of dimethoxyethane, ethylene glycol diethyl ether, diethylene glycol dimethyl ether, triethylene glycol dimethyl ether, tetraethylene glycol dimethyl ether, ethylene glycol methylene ether, tetrahydrofuran, methyltetrahydrofuran, diphenyl ether, and crown ether. The ether organic substance can facilitate formation of a stable solid electrolyte interface film and reduce electrochemical polarization.

According to any one of the embodiments of the first aspect of this application, the functional group is a cyano group. The cyano group can allow the coordinating organic substance to have better stability and stronger coordination capability, which can facilitate formation of a stable solid electrolyte interface film on the surface of the electrode plate, thereby further improving the cycling performance of the sodium-ion battery.

According to any one of the embodiments of the first aspect of this application, the coordinating organic substance includes at least one of 1,3,6-hexanetricarbonitrile, 1,3,5-pentanetricarbonitrile, succinonitrile, glutaronitrile, adiponitrile, 2-fluoroadiponitrile, 2,2-difluorosuccinonitrile, tricyanobenzene, and 1,2-bis(cyanoethoxy)ethane.

According to any one of the embodiments of the first aspect of this application, based on a total volume of the organic solvent, a volume percentage of the fluorinated organic substance in the organic solvent is 5%-30%; a volume percentage of the ether organic substance in the organic solvent is 55%-93%; and a volume percentage of the coordinating organic substance in the organic solvent is 2%-15%. The components of the organic solvent being set within the above suitable ranges can facilitate the collaboration between the components, so that the cycling performance of sodium-ion batteries in high-temperature environments can be greatly improved.

According to any one of the embodiments of the first aspect of this application, the sodium salt includes at least one of sodium hexafluorophosphate, sodium difluorooxalatoborate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethanesulfonyl)imide.

According to a second aspect, an embodiment of this application provides a sodium-ion battery including the electrolyte according to any one of the embodiments of the first aspect of this application.

According to any one of the embodiments of the second aspect of this application, the sodium-ion battery further includes a positive electrode plate, where the positive electrode plate includes a positive electrode current collector and a positive electrode active material layer disposed on at least one surface of the positive electrode current collector and including a positive electrode active material; and the positive electrode active material includes at least one of sodium transition metal oxide, polyanionic compound, and Prussian blue compound.

According to any one of the embodiments of the second aspect of this application, the sodium transition metal oxide has a general formula $Na_xMO_2$, where M is one or more of Ti, V, Mn, Co, Ni, Fe, Cr, and Cu, and $0 < x \leq 1$; the polyanionic compound includes one or more of vanadium trifluorophosphate, sodium vanadium fluorophosphate, sodium vanadium phosphate, sodium iron phosphate, and $Na_4Fe_3(PO_4)_2P_2O_7$; and the Prussian blue compound has a general formula $Na_yM^1M^2(CN)_6$, where $M^1$ and $M^2$ each independently are one or more of Fe, Mn, Co, Ni, Cu, Zn, Cr, Ti, V, Zr, and Ce, and $0 < y \leq 2$.

According to any one of the embodiments of the second aspect of this application, the sodium-ion battery further includes a negative electrode plate, where the negative electrode plate includes a negative electrode current collector and a negative electrode active material layer disposed on at least one surface of the negative electrode current collector and including a negative electrode active material; and the negative electrode active material includes at least one of a carbon material, sodium metal, sodium alloy, and sodium metal oxide.

According to a third aspect, an embodiment of this application provides a battery module including the sodium-ion battery according to any one of the embodiments of the second aspect of this application.

According to a fourth aspect, an embodiment of this application provides a battery pack including the sodium-ion battery according to any one of the embodiments of the second aspect of this application or the battery module according to any one of the embodiments of the third aspect of this application.

According to a fifth aspect, an embodiment of this application provides an electric apparatus including the sodium-ion battery according to any one of the embodiments of the second aspect of this application, the battery module according to any one of embodiments of the third aspect of this application, or the battery pack according to any one of the embodiments of the fourth aspect of this application.

## BRIEF DESCRIPTION OF DRAWINGS

To describe embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic structural diagram of a vehicle according to some embodiments of this application;
FIG. 2 is a schematic structural diagram of a battery pack according to some embodiments of this application;
FIG. 3 is a schematic structural exploded view of the battery pack in FIG. 2;
FIG. 4 is a schematic structural diagram of the battery module in FIG. 3;
FIG. 5 is a schematic structural diagram of a sodium-ion battery cell according to some embodiments of this application; and
FIG. 6 is a schematic structural exploded view of the sodium-ion battery cell in FIG. 5.

The accompanying drawings are not drawn to scale.

Description of reference signs:

vehicle 1000;
battery pack 100; controller 200; motor 300;
first box body 11; second box body 12;
battery module 20;
sodium-ion battery cell 30; housing 31; electrode assembly 32; and cover assembly 33.

## DESCRIPTION OF EMBODIMENTS

The following describes in detail the embodiments of this application with reference to the accompanying drawings. The following embodiments are merely intended for a clearer description of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only A. In addition, the character "/" in this specification generally indicates an "or" relationship between contextually associated objects.

Various modifications and changes can be made without departing from the protection scope of this application, and this is apparent to persons skilled in the art. Therefore, this application is intended to cover modifications and changes of this application that fall within the scope of the corresponding claims (protection scope of the claims) and their equivalents. It should be noted that the implementations provided in the embodiments of this application can be combined with each other in the absence of conflicts.

Before describing the protection scope of the embodiments of this application, for ease of understanding of the embodiments of this application, the problems existing in the related art are described in detail in this application first.

Sodium-ion batteries, with their characteristics such as long cycle life, high safety, and low costs, have become one of the research hotspots in the field of batteries, and have been used in consumer electronic devices, transportation tools, grid energy storage devices, engineering machinery, and other fields.

However, in the related art, for a sodium-ion battery in high-temperature environments, a solid electrolyte interface (solid electrolyte interface, SEI) film formed on a surface of an electrode of the sodium-ion battery is prone to cracking, resulting in deteriorated cycling performance of the sodium-ion battery.

In view of this, the embodiments of this application provide an electrolyte, a sodium-ion battery, a battery module, a battery pack, and an electric apparatus, where the electrolyte can improve cycling performance of sodium-ion batteries in high-temperature environments.

In this application, the electric apparatus may be a vehicle, a mobile phone, a portable device, a notebook computer, a ship, a spacecraft, an electric toy, an electric tool, or the like. The vehicle may be a fossil fuel vehicle, a natural-gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus of an embodiment of this application being a vehicle is used as an example for description of the following embodiments.

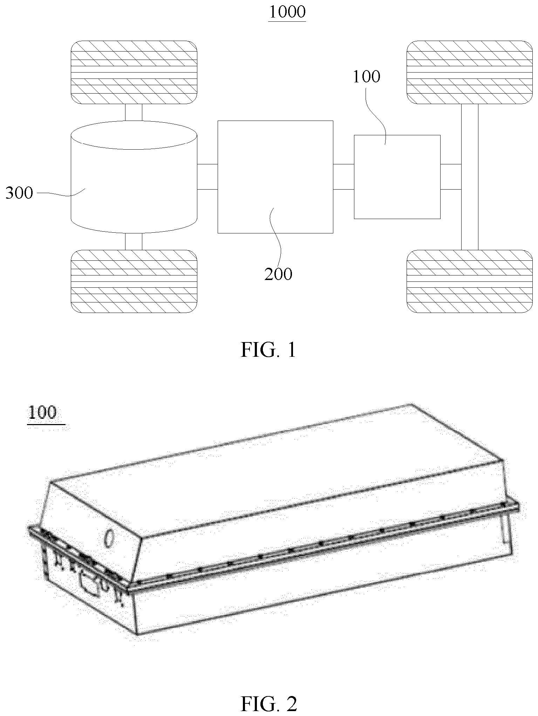

As shown in FIG. 1, a vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery pack 100 inside, where the battery pack 100 may be disposed at the bottom, front or rear of the vehicle 1000. The battery pack 100 may be configured to supply power to the vehicle 1000. For example, the battery pack 100 may be used as an operational power source for the vehicle 1000. The vehicle 1000 may further include a controller 200 and a motor 300, where the controller 200 is configured to control the battery pack 100 to supply power to the motor 300, for example, to satisfy power needs of start, navigation, and driving of the vehicle 1000.

In some embodiments of this application, the battery pack 100 can be used as not only the operational power source for the vehicle 1000 but also a driving power source for the vehicle 1000, replacing or partially replacing fossil fuel or natural gas to provide driving traction for the vehicle 1000.

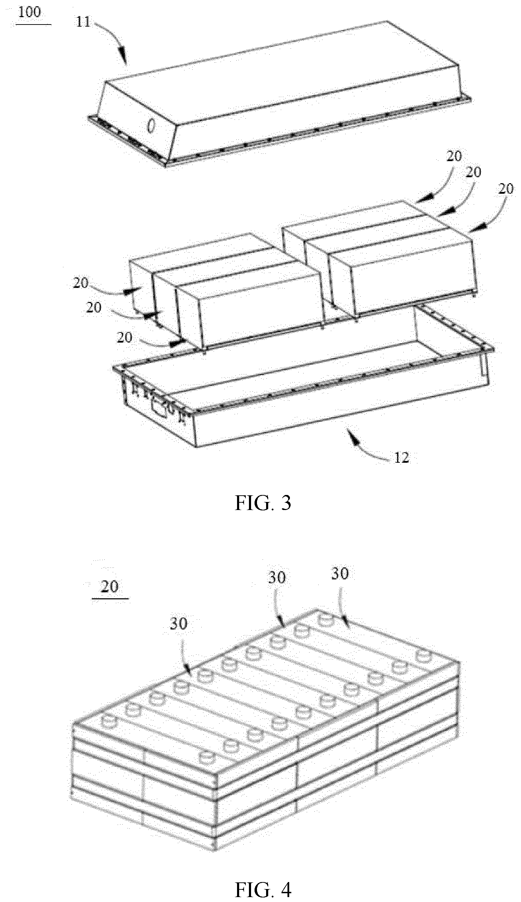

FIG. 2 is a schematic structural diagram of a battery pack according to some embodiments of this application. FIG. 3 is a schematic structural exploded view of the battery pack in FIG. 2.

The battery pack 100 in this application includes at least one battery module 20 or at least one battery cell 30. As shown in FIG. 2 and FIG. 3, the battery pack 100 includes a box and a battery module 20, with the battery module 20 accommodated in the box.

The battery pack 100 includes a box and a battery module 20, with the battery module 20 accommodated in the box. The box is configured to provide an accommodating space for the battery module 20. The box may be a variety of structures. In some embodiments, the box may include a first box body 11 and a second box body 12. The first box body 11 and the second box body 12 are engaged with each other to jointly define an accommodating space for accommodating the battery module 20. The second box body 12 may be a hollow structure with one end open, the first box body 11 may be a plate structure, and the first box body 11 covers an open side of the second box body 12, so that the first box body 11 and the second box body 12 jointly define an accommodating space. The first box body 11 and the second box body 12 may both be a hollow structure with one side open, and the open side of the first box body 11 is engaged with the open side of the second box body 12. Certainly, the box formed by the first box body 11 and the second box body 12 may be of various shapes, for example, cylinder or cuboid.

In the battery pack 100, the battery module 20 may be present in plurality, and the plurality of battery modules 20 may be connected in series, parallel, or series-parallel, where being connected in series-parallel means a combination of series and parallel connections of the plurality of battery modules 20. The plurality of battery modules 20 may be directly connected in series, parallel, or series-parallel, and then an entirety of the plurality of battery modules 20 is accommodated in the box.

FIG. 4 is a schematic structural diagram of the battery module in FIG. 3.

The battery module 20 includes one or more sodium-ion battery cells 30. For example, as shown in FIG. 4, the battery module 20 includes a plurality of sodium-ion battery cells 30, and the plurality of sodium-ion battery cells 30 may be connected in series, parallel, or series-parallel, where being connected in series-parallel means a combination of series and parallel connections of the plurality of sodium-ion battery cells 30. The plurality of sodium-ion battery cells 30 may be directly connected in series, parallel, or series-parallel.

Each sodium-ion battery cell 30 may be a secondary battery cell or a primary battery. In addition, the sodium-ion battery cell 30 may be cylindrical, flat, cuboid, or of other shapes.

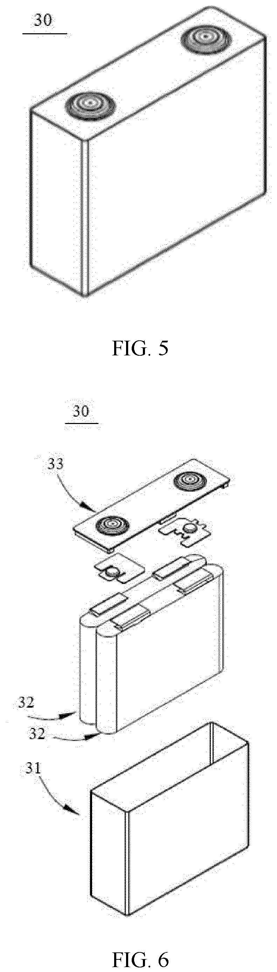

FIG. 5 is a schematic structural diagram of a sodium-ion battery cell according to some embodiments of this application. FIG. 6 is a schematic structural exploded view of the sodium-ion battery cell in FIG. 5.

As shown in FIG. 5, the sodium-ion battery cell 30 refers to a smallest unit constituting a battery. As shown in FIG. 6, the sodium-ion battery cell 30 includes a housing 31, an electrode assembly 32, and a cover assembly 33. The housing 31 has a cavity for accommodating the electrode assembly 32, and the cover assembly 33 is configured to close an opening of the housing 31. The cover assembly 33 includes an end cover, where the end cover is connected to the housing 31 to form an enclosure of the sodium-ion battery cell 30. The electrode assembly 32 is disposed in the housing 31, and the housing 31 is filled with electrolyte.

The end cover refers to a component that covers the opening of the housing 31 to isolate an internal environment of the sodium-ion battery cell 30 from an external environment. Without limitation, a shape of the end cover may fit with that of the housing 31, so that the end cover can match the housing 31. Optionally, the end cover may be made of materials with certain hardness and strength (for example, aluminum alloy), so that the end cover is less likely to deform when subjected to extrusion and collision, allowing the sodium-ion battery cell 30 to have higher structural strength and enhanced safety performance. The end cover may be provided with functional components such as an electrode terminal. The electrode terminal may be configured to be electrically connected to the electrode assembly 32 for outputting or inputting electrical energy of the sodium-ion battery cell 30. In some embodiments, the end cover may be further provided with a pressure relief mechanism for releasing internal pressure when the internal pressure or a temperature of the sodium-ion battery cell 30 reaches a threshold. The end cover may also be made of various materials, such as copper, iron, aluminum, stainless steel, aluminum alloy, and plastic, which are not particularly limited in the embodiments of this application. In some embodiments, an insulator may also be provided at an inner side of the end cover. The insulator may be configured to isolate an electrically connected component in the housing 31 from the end cover to reduce a risk of short circuit. For example, the insulator may be made of plastic, rubber, or the like.

The housing 31 is an assembly configured to form an internal environment of the sodium-ion battery cell 30 together with the end cover, where the formed internal environment can be used to accommodate the electrode assembly 32, an electrolyte, and other components. The housing 31 and the end cover may be independent components, an opening may be provided in the housing 31, and the end cover covers the opening to form the internal environment of the sodium-ion battery cell 30. Without limitation, the end cover and the housing 31 may also be integrated. Specifically, the end cover and the housing 31 may form a shared connection surface before other components are disposed inside the housing, and then the end cover covers the housing 31 when inside of the housing 31 needs to be enclosed. The housing 31 may be of various shapes and sizes, such as a cuboid shape, a cylindrical shape, and a hexagonal prism shape.

The electrode assembly 32 is a component in which electrochemical reactions take place in the sodium-ion battery cell 30. The housing 31 may include one or more electrode assemblies 32. The electrode assembly 32 is mainly formed by winding or stacking a positive electrode plate and a negative electrode plate, and a separator is generally disposed between the positive electrode plate and the negative electrode plate. Parts of the positive electrode plate and the negative electrode plate with active substances constitute a main body of the electrode assembly 32, while parts of the positive electrode plate and the negative electrode plate without active substances each constitute a tab. A positive electrode tab and a negative electrode tab may both be located at one end of the main body or be located at two ends of the main body respectively. During charge and discharge of the battery, a positive electrode active substance and a negative electrode active substance react with an electrolyte, and the tabs are connected to the electrode terminals to form a current loop.

## Electrolyte

An embodiment of this application provides an electrolyte. The electrolyte includes a sodium salt and an organic solvent, where the organic solvent includes a fluorinated organic substance, an ether organic substance, and a coordinating organic substance, and the coordinating organic substance includes a plurality of functional groups capable of coordinating with transition metal.

In the electrolyte provided in this embodiment of this application, the fluorinated organic substance and the coordinating organic substance can be together dissolved and collaborate in the ether organic substance under high-temperature environment conditions, so as to produce a stable solid electrolyte interface film on a surface of an electrode. On one hand, the fluorinated organic substance can facilitate formation of a stable solid electrolyte interface film on a surface of an electrode plate to reduce formation of sodium dendrites, thereby improving cycling performance of a sodium-ion battery. On the other hand, transition metal dissolved from the electrode plate under high-temperature environments can coordinate with the functional groups in the coordinating organic substance to reduce the damage caused by the transition metal to the solid electrolyte interface film, improving stability of the solid electrolyte interface film, and thus further improving the cycling performance of the sodium-ion battery. Therefore, the electrolyte provided in this embodiment of this application can improve the cycling performance of sodium-ion batteries in high-temperature environments.

In some embodiments of this application, the fluorinated organic substance includes a fluorocarbonate and/or a fluoroether.

Fluorocarbonate refers to a compound in which some or all of the hydrogen atoms in the carbonate are replaced by fluorine atoms. Fluoroether refers to a compound in which some or all of the hydrogen atoms in the ether are replaced by fluorine atoms.

In the foregoing embodiments, the fluorocarbonate and the fluoroether can facilitate formation of an SEI film rich in sodium fluoride (NaF), and the NaF-rich SEIM not only has higher mechanical strength to adapt to larger volume change, but also can facilitate uniform deposition of Na. Consequently, this further improves the stability of the solid electrolyte interface film, effectively reducing formation of sodium dendrites. As a result, the cycling performance of the sodium-ion battery can be greatly improved.

In some embodiments of this application, the fluorocarbonate includes a linear fluorocarbonate and/or a cyclic fluorocarbonate.

Linear fluorocarbonate refers to a compound in which some or all of the hydrogen atoms in the linear carbonate are replaced by fluorine atoms. Cyclic fluorocarbonate refers to a compound in which some or all of the hydrogen atoms in the cyclic carbonate are replaced by fluorine atoms.

In some embodiments of this application, the linear fluorocarbonate includes at least one of trifluoromethyl ethyl carbonate (FEMC), trifluoromethyl propyl carbonate, bis(trifluoromethyl)carbonate, and bis(2,2,2-trifluoroethyl)carbonate.

In some other specific embodiments of this application, the cyclic fluorocarbonate includes at least one of fluoroethylene carbonate (FEC), fluoropropylene carbonate, and fluorobutylene carbonate.

In some specific embodiments of this application, the fluoroether includes at least one of 1,1,2,2-tetrafluoroethyl-2,2,2-trifluoroethyl ether (HFE-347), 1,1,2,2-tetrafluoroethyl-2,2,3,3-tetrafluoropropyl ether, bis(2,2,2-trifluoroethyl)ether, methyl nonafluorobutyl ether, and ethyl nonafluorobutyl ether.

In this embodiment of this application, the ether organic substance can facilitate co-dissolution and collaboration of the fluorinated organic substance and the coordinating organic substance, so as to form a stable SEI film.

In some embodiments of this application, the ether organic substance includes at least one of dimethoxyethane, ethylene glycol diethyl ether, diethylene glycol dimethyl ether, triethylene glycol dimethyl ether, tetraethylene glycol dimethyl ether, ethylene glycol methylene ether, tetrahydrofuran, methyltetrahydrofuran, diphenyl ether, and crown ether.

In the foregoing embodiments, the ether organic substance can facilitate formation of a stable solid electrolyte interface film and reduce electrochemical polarization.

In some embodiments of this application, the functional group in the coordinating organic substance is a cyano group.

In the foregoing embodiments, the cyano group (-CN) can allow the coordinating organic substance to have better stability and stronger coordination capability, which can facilitate formation of a stable solid electrolyte interface film on the surface of the electrode plate, thereby further improving the cycling performance of the sodium-ion battery.

In some embodiments of this application, the coordinating organic substance includes a nitrile-based solvent containing 2 to 4 cyano groups.

In the foregoing embodiments, the nitrile-based solvent containing 2 to 4 cyano groups can have enhanced coordination capability, allowing the nitrile solvent to be better bonded with transition metal. This further helps enhance resistance of the electrolyte to the oxidation of the electrode plate, thereby reducing decomposition of the electrolyte.

In some specific embodiments of this application, the coordinating organic substance includes at least one of 1,3,6-hexanetricarbonitrile (HTCN), 1,3,5-pentanetricarbonitrile, succinonitrile, glutaronitrile, adiponitrile, 2-fluoroadiponitrile, 2,2-difluorosuccinonitrile, tricyanobenzene, and 1,2-bis(cyanoethoxy)ethane.

In this embodiment of this application, the fluorinated organic substance, ether organic substance, and coordinating organic substance in the electrolyte falling within suitable volume percentage ranges can facilitate the synergistic effect, resulting in improved cycling performance of the sodium-ion battery in high-temperature environments.

In some embodiments of this application, based on a total volume of the organic solvent, a volume percentage of the fluorinated organic substance in the organic solvent is 5%-30%. The fluorinated organic substance being within the above suitable range can help improve the cycling performance of the sodium-ion battery in high-temperature environments.

For example, the volume percentage of the fluorinated organic substance in the organic solvent may be but is not limited to 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, or 30%.

Based on the foregoing embodiments, a volume percentage of the ether organic substance in the organic solvent is 55%-93%. The ether organic substance being within the above suitable range can facilitate formation of a stable SEI film and further reduce electrochemical polarization.

For example, the volume percentage of the ether organic substance in the organic solvent may be but is not limited to 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, or 93%.

Based on the foregoing embodiments, a volume percentage of the coordinating organic substance in the organic solvent is 2%-15%. The coordinating organic substance being within the above suitable range can allow for suitable viscosity of the electrolyte, thus allowing for low internal resistance of the sodium-ion battery.

For example, the volume percentage of the coordinating organic substance in the organic solvent may be but is not limited to 2%, 3%, 4%, 5%, 6%, 7%, 8%, 9%, 10%, 11%, 12%, 13%, 14%, or 15%.

In this embodiment of this application, the sodium salt may be any of the well-known electrolytic sodium salts for sodium-ion batteries.

In some embodiments of this application, the sodium salt includes at least one of sodium hexafluorophosphate ($NaPF_6$), sodium difluorooxalatoborate (NaDFOB), sodium tetrafluoroborate ($NaBF_4$), sodium bis(fluorosulfonyl)imide (NaFSI), sodium bis(trifluoromethanesulfonyl)imide (NaTFSI), sodium bis(oxalato)borate (NaBOB), sodium perchlorate, sodium hexafluoroarsenate, and sodium trifluoromethanesulfonate.

When the sodium-ion battery is in high-temperature environments (temperature > 30°C), anions contained in the electrolyte decompose to produce decomposition products. The decomposition products damage the SEI film, resulting in decreased cycling stability of the sodium-ion battery. The amount of the sodium salt being controlled within a reasonable range can help improve the cycling performance of the sodium-ion battery.

In some embodiments of this application, a concentration of the sodium salt may be set to be 0.5-8 mol/L.

For example, the concentration of the sodium salt may be but is not limited to 0.5 mol/L, 1.0 mol/L, 1.5 mol/L, 2.0 mol/L, 2.5 mol/L, 3.0 mol/L, 3.5 mol/L, 4.0 mol/L, 4.5 mol/L, 5.0 mol/L, 5.5 mol/L, 6.0 mol/L, 6.5 mol/L, 7.0 mol/L, 7.5 mol/L, or 8.0 mol/L.

## Sodium-ion battery

An embodiment of this application provides a sodium-ion battery including the electrolyte according to any one of the foregoing embodiments.

In addition, the sodium-ion battery in this embodiment of this application further includes an electrode assembly. The electrode assembly generally includes a positive electrode plate, a negative electrode plate, and a separator disposed between the positive electrode plate and the negative electrode plate. The positive electrode plate includes a positive electrode current collector and a positive electrode active material layer disposed on at least one surface of the positive electrode current collector and including a positive electrode active material.

In some embodiments of this application, the positive electrode active material includes at least one of sodium transition metal oxide, polyanionic compound, and Prussian blue compound.

For example, the sodium transition metal oxide has a general formula $Na_xMO_2$, where M is one or more of Ti, V, Mn, Co, Ni, Fe, Cr, and Cu, and $0 < x \leq 1$; the polyanionic compound includes one or more of vanadium trifluorophosphate, sodium vanadium fluorophosphate, sodium vanadium phosphate, sodium iron phosphate, and $Na_4Fe_3(PO_4)_2P_2O_7$; and the Prussian blue compound has a general formula $Na_yM^1M^2(CN)_6$, where $M^1$ and $M^2$ each independently are one or more of Fe, Mn, Co, Ni, Cu, Zn, Cr, Ti, V, Zr, and Ce, and $0 < y \leq 2$.

In addition, in some embodiments of this application, the positive electrode active material layer may further include a conductive agent and a binder, where the conductive agent is used to improve electrical conductivity of the positive electrode active material layer, and the binder is used to firmly adhere the positive electrode active material and the binder to the positive electrode current collector. Types of the conductive agent and binder are not specifically limited in the embodiments of this application and can be selected depending on actual needs.

For example, the conductive agent may include at least one of superconducting carbon, acetylene black, carbon black, Ketjen black, carbon dots, carbon nanotubes, graphene, and carbon nanofiber; and the binder may include at least one of styrene-butadiene rubber (SBR), water-based acrylic resin (water-based acrylic resin), carboxymethyl cellulose (CMC), polyvinylidene fluoride (PVDF), polytetrafluoroethylene (PTFE), ethylene vinyl acetate (EVA), and polyvinyl alcohol (PVA).

In this embodiment of this application, the positive electrode current collector may be made of a metal foil, a carbon-coated metal foil, or a porous metal plate. In some specific embodiments of this application, the positive electrode current collector is made of an aluminum foil.

In some embodiments of this application, the negative electrode plate includes a negative electrode current collector and a negative electrode active material layer disposed on at least one surface of the negative electrode current collector and including a negative electrode active material; and the negative electrode active material includes at least one of a carbon material, sodium metal, sodium alloy, and sodium metal oxide.

In addition, in some embodiments of this application, the negative electrode active material layer may further include a conductive agent and a binder, where the conductive agent is used to improve electrical conductivity of the negative electrode active material layer, and the binder is used to firmly adhere the negative electrode active material and the binder to the negative electrode current collector. Types of the conductive agent and binder are not specifically limited in the embodiments of this application and can be selected depending on actual needs.

For example, the conductive agent may include at least one of superconducting carbon, acetylene black, carbon black, Ketjen black, carbon dots, carbon nanotubes, graphene, and carbon nanofiber; and the binder may include at least one of styrene-butadiene rubber (SBR), styrene-butadiene copolymers (SBCs), water-based acrylic resin (water-based acrylic resin), and carboxymethyl cellulose (CMC).

In some embodiments of this application, the negative electrode active material layer may further include a thickener, for example, carboxymethyl cellulose (CMC). However, the embodiments of this application are not limited thereto, and may alternatively use other materials that can be used as thickeners for negative electrode plates of sodium-ion batteries.

In this embodiment of this application, the negative electrode current collector may be made of a metal foil, a carbon-coated metal foil, a porous metal plate, or the like. In some specific embodiments of this application, the negative electrode current collector is made of a copper foil.

The separator is not particularly limited in the embodiments of this application, and any one of common porous separators with electrochemical and mechanical stability can be selected, for example, mono-layer or multi-layer films containing one or more of glass fiber, non-woven fabric, polyethylene, polypropylene, and polyvinylidene fluoride.

In addition, the sodium-ion battery further includes a housing and an end cover assembly. The housing is an assembly configured to form an internal environment of the sodium-ion battery cell together with the end cover assembly, where the formed internal environment can be used to accommodate the electrode assembly, an electrolyte, and other components.

The sodium-ion battery provided in the embodiments of this application may be prepared in a conventional method. For example, the follow preparation method may be used: A positive electrode active material, a conductive agent, and a binder are dispersed in a solvent (for example, N-methylpyrrolidone, NMP for short) to form a uniform positive electrode slurry; then the positive electrode slurry is applied onto two opposite surfaces of a positive electrode current collector, followed by drying, cold pressing, and punching, to produce a positive electrode plate; similarly, a negative electrode active material, a conductive agent, a binder, and a thickener are dispersed in a solvent (for example, deionized water) to form a uniform negative electrode slurry, and then the negative electrode slurry is applied onto two opposite surfaces of a negative electrode current collector, followed by drying, cold pressing, and punching, to produce a negative electrode plate; then the positive electrode plate, a separator, and the negative electrode plate are stacked in sequence to produce an electrode assembly, or stacked in sequence and wound to obtain an electrode assembly; and finally, the electrode assembly is placed in a housing, an electrolyte is injected, and the housing is sealed, to obtain a sodium-ion battery.

**Battery module**

An embodiment of this application provides a battery module including the sodium-ion battery according to any one of the foregoing embodiments. With the sodium-ion battery in the foregoing embodiments included, the battery module also has the technical effects of the foregoing sodium-ion battery. Details are not described herein again.

**Battery pack**

An embodiment of this application provides a battery pack including the sodium-ion battery according in the foregoing embodiments or the battery module in the foregoing embodiments. With the sodium-ion battery or battery module in the foregoing embodiments included, the battery pack also has the technical effects of the foregoing sodium-ion battery or battery module. Details are not described herein again.

**Electric apparatus**

An embodiment of this application provides an electric apparatus including the sodium-ion battery according in the foregoing embodiments, the battery module in the foregoing embodiments, or the battery pack in the foregoing embodiments. With the sodium-ion battery, battery module, or battery pack in the foregoing embodiments included, the electric apparatus has long service life and endurance mileage.

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on weight, all reagents used in the examples are commercially available or synthesized in a conventional manner, and can be used directly without further treatment, and all instruments used in the examples are commercially available.

**Example 1**

Preparation of positive electrode plate

A binder 10wt% polyvinylidene fluoride (PVDF) was fully dissolved in NMP, and a conductive agent 10wt% carbon black and a positive electrode active material 80wt% $Na_4Fe_3(PO_4)_2P_2O_7$ were added to produce a uniformly dispersed positive electrode slurry; and the positive electrode slurry was applied onto two opposite surfaces of an aluminum foil, followed by drying, cold pressing, and punching, to produce a positive electrode plate.

Preparation of negative electrode plate

A material 4wt% carbon nanotubes and a polymer binder 1.6wt% sodium carboxymethyl cellulose were added to water and the mixture was stirred to produce a uniform negative electrode slurry; and the negative electrode slurry was applied onto two opposite surfaces of a copper foil, followed by drying, cold pressing, and punching, to produce a negative electrode plate.

Preparation of electrolyte

In an argon atmosphere glove box ($H_2O$ < 0.1 ppm, and $O_2$ < 0.1 ppm), a sodium salt sodium bis(trifluoromethanesulfonyl)imide (NaTFSI), fluoroethylene carbonate (FEC), and 1,3,6-hexanetricarbonitrile (HTCN) were dissolved in an ether organic substance dimethoxyethane (DME) according to the ratio shown in Table 1 and the mixture was stirred to uniformity to produce an electrolyte with a sodium salt concentration of 1 mol/L.

Separator

A polypropylene film was used as a separator.

Preparation of sodium-ion battery

The positive electrode plate, the separator, and the negative electrode plate were stacked in sequence so that the separator was located between the positive electrode plate and the negative electrode plate to obtain an electrode assembly, the electrode assembly was placed into a housing, then the electrolyte was injected, and the housing was sealed, to obtain a sodium-ion battery.

Examples 2 to 14 and comparative examples 1 to 6

The preparation method was the same as in example 1 except for the components and their volume percentages in the organic solvent. For details, refer to Table 1.

Tests

(1) Test for coulombic efficiency

At 25°C, the battery was constant-current charged at 1/3C to 4.15 V, and then constant-voltage charged at 4.15 V until the current decreased to 0.05C, to obtain the first-cycle charge capacity ($C_{c1}$); and then the battery was constant-current discharged at 1/3C to 2.5 V to obtain the first-cycle discharge capacity ($C_{d1}$). The coulombic efficiency could be calculated according to the following formula:

$$\text{coulombic efficiency} = C_{d1}/C_{c1} \times 100\%.$$

(2) Test for capacity retention rate

At 45°C, the battery was constant-current charged at 1C to 4.15 V, then constant-voltage charged at 4.15 V until the current decreased to 0.05C, and then constant-current discharged at 1C to 2.5 V, to obtain the first-cycle charge capacity ($C_{c1}$); and then the battery was charged and discharged as such repeatedly until the 200th cycle, and the discharge capacity was denoted as $C_{d200}$. The capacity retention rate could be calculated according to the following formula:

$$\text{capacity retention rate} = C_{d200}/C_{d1} \times 100\%.$$

(3) Test for transition metal cyanide

Transition metal cyanide was tested using the ion chromatography UV test method. The test method is as follows.
A sample was taken for each example and comparative example, and the sample was the electrolyte of the battery after 200 cycles.
A chromatographic column was used for separating the electrolyte to obtain a to-be-tested solution.
Quantitative test was performed on the to-be-tested solution using an ion chromatograph.
As can be seen from the above quantitative test, it is found in each example that the to-be-tested solution has a characteristic peak at a position with a wavelength of about 215 nm, and therefore the test can indicate that the cyano group can coordinate with transition metal to produce a complex.

**Table 1**

| No. | Components of organic solvent and volume percentages (%) | Coulombic efficiency (%) | Capacity retention rate (%) |
|---|---|---|---|
| Example 1 | DME:FEC:HTCN (70:20:10) | 97.5 | 90.2 |
| Example 2 | DME:FEC:HTCN (93:5:2) | 94.6 | 86.1 |
| Example 3 | DME:FEC:HTCN (55:30:15) | 96.8 | 88.4 |
| Example 4 | DME:FEC:HTCN (70:20:10) | 96.9 | 88.8 |
| Example 5 | DME:FEC:HTCN (70:20:10) | 95.2 | 87.6 |
| Example 6 | DME:FEC:HTCN (70:20:10) | 94.5 | 86.1 |
| Example 7 | DME:FEC:HTCN (70:20:10) | 92.3 | 84.9 |
| Example 8 | DEE:FEC:HTCN (70:20:10) | 97.0 | 89.4 |
| Example 9 | DME:FEMC:HTCN (70:20:10) | 97.1 | 89.8 |
| Example 10 | DME:HFE-347 :HTCN (70:20:10) | 96.7 | 88.2 |
| Example 11 | DME:FEC:1,3,5-pentanetricarbonitrile (70:20:10) | 96.4 | 87.9 |
| Example 12 | DME:FEC: succinonitrile (70:20:10) | 95.7 | 88.1 |
| Example 13 | DME:FEC:2,2-difluorosuccinonitrile (70:20:10) | 96.1 | 88.6 |
| Example 14 | DME:FEC:tricyanobenzene (70:20:10) | 94.3 | 85.7 |
| Comparative example 1 | DME | 82.6 | 71.8 |
| Comparative example 2 | DME:FEC (80:20) | 84.9 | 74.1 |
| Comparative example 3 | DME:HTCN (90:10) | 85.4 | 76.5 |
| Comparative example 4 | DME:FEC:acetonitrile (70:20:10) | 87.7 | 78.2 |
| Comparative example 5 | FEC:acetonitrile (67:33) | 78.5 | 66.2 |
| Comparative example 6 | DMC:FEC:acetonitrile (70:20:10) | 81.6 | 68.9 |

According to Table 1, it can be learned from comparison between the test results in examples 1 to 14 and comparative examples 1 to 6 that the electrolyte provided in the embodiments of this application allows the sodium-ion battery to have better cycling performance at high temperatures.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all embodiments falling within the scope of the claims.

**Claims**

1.   An electrolyte, comprising:

a sodium salt; and
an organic solvent, wherein the organic solvent comprises a fluorinated organic substance, an ether organic substance, and a coordinating organic substance, and the coordinating organic substance comprises a plurality of functional groups capable of coordinating with transition metal.

2.   The electrolyte according to claim 1, wherein the fluorinated organic substance comprises a fluorocarbonate and/or a fluoroether.

3.   The electrolyte according to claim 2, wherein the fluorocarbonate comprises a fluoro-chain; wherein

optionally, the linear fluorocarbonate comprises at least one of trifluoromethyl ethyl carbonate, trifluoromethyl propyl carbonate, bis(trifluoromethyl)carbonate, and bis(2,2,2-trifluoroethyl)carbonate; and
optionally, the cyclic fluorocarbonate comprises at least one of fluoroethylene carbonate, fluoropropylene carbonate, and fluorobutylene carbonate.

4. The electrolyte according to claim 2 or 3, wherein the fluoroether comprises at least one of 1,1,2,2-tetrafluoroethyl-2,2,2-trifluoroethyl ether, 1,1,2,2-tetrafluoroethyl-2,2,3,3-tetrafluoropropyl ether, bis(2,2,2-trifluoroethyl)ether, methyl nonafluorobutyl ether, and ethyl nonafluorobutyl ether.

5. The electrolyte according to any one of claims 1 to 4, wherein the ether organic substance comprises at least one of dimethoxyethane, ethylene glycol diethyl ether, diethylene glycol dimethyl ether, triethylene glycol dimethyl ether, tetraethylene glycol dimethyl ether, ethylene glycol methylene ether, tetrahydrofuran, methyltetrahydrofuran, diphenyl ether, and crown ether.

6. The electrolyte according to any one of claims 1 to 5, wherein the functional group is a cyano group.

7. The electrolyte according to any one of claims 1 to 6, wherein the coordinating organic substance comprises at least one of 1,3,6-hexanetricarbonitrile, 1,3,5-pentanetricarbonitrile, succinonitrile, glutaronitrile, adiponitrile, 2-fluoroadiponitrile, 2,2-difluorosuccinonitrile, tricyanobenzene, and 1,2-bis(cyanoethoxy)ethane.

8. The electrolyte according to any one of claims 1 to 7, wherein based on a total volume of the organic solvent, a volume percentage of the fluorinated organic substance in the organic solvent is 5%-30%;

a volume percentage of the ether organic substance in the organic solvent is 55%-93%; and
a volume percentage of the coordinating organic substance in the organic solvent is 2%-15%.

9. The electrolyte according to any one of claims 1 to 8, wherein the sodium salt comprises at least one of sodium hexafluorophosphate, sodium difluorooxalatoborate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethanesulfonyl)imide.

10. A sodium-ion battery, comprising the electrolyte according to any one of claims 1 to 9.

11. The sodium-ion battery according to claim 10, further comprising a positive electrode plate, wherein the positive electrode plate comprises a positive electrode current collector and a positive electrode active material layer disposed on at least one surface of the positive electrode current collector and comprising a positive electrode active material; and the positive electrode active material comprises at least one of transition metal oxide, polyanionic compound, and Prussian blue compound.

12. The sodium-ion battery according to claim 11, wherein the sodium transition metal oxide has a general formula $Na_xMO_2$, wherein M is one or more of Ti, V, Mn, Co, Ni, Fe, Cr, and Cu, and $0 < x \leq 1$;

the polyanionic compound comprises one or more of vanadium trifluorophosphate, sodium vanadium fluorophosphate, sodium vanadium phosphate, sodium iron phosphate, and $Na_4Fe_3(PO_4)_2P_2O_7$; and
the Prussian blue compound has a general formula $Na_yM^1M^2(CN)_6$, wherein $M^1$ and $M^2$ each independently are one or more of Fe, Mn, Co, Ni, Cu, Zn, Cr, Ti, V, Zr, and Ce, and $0 < y \leq 2$.

13. The sodium-ion battery according to any one of claims 10 to 12, further comprising a negative electrode plate, wherein the negative electrode plate comprises a negative electrode current collector and a negative electrode active material layer disposed on at least one surface of the negative electrode current collector and comprising a negative electrode active material; and the negative electrode active material comprises at least one of a carbon material, sodium metal, sodium alloy, and sodium metal oxide.

14. A battery module, comprising the sodium-ion battery according to any one of claims 10 to 13.

15. A battery pack, comprising the sodium-ion battery according to any one of claims 10 to 13 or the battery module according to claim 14.

16. An electric apparatus, comprising the sodium-ion battery according to any one of claims 10 to 13, the battery module according to claim 14, or the battery pack according to claim 15.

1000

100

300

200

FIG. 1

100

FIG. 2

FIG. 3

FIG. 4

30

FIG. 5

30

33

32

32

31

FIG. 6

## INTERNATIONAL SEARCH REPORT

| International application No. |
|---|
| **PCT/CN2022/122033** |

### A. CLASSIFICATION OF SUBJECT MATTER

H01M10/0568(2010.01)i;H01M10/0566(2010.01)i;H01M10/0567(2010.01)i;H01M10/054(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT; ISI: 宁德时代, 电解液, 电解质, 钠, 添加剂, 氟代, 醚, 酯, 腈, electrolyte, addict+, fluoro, ether, ester, nitrile

### C. DOCUMENTS CONSIDERED TO BE RELEVANT

| Category* | Citation of document, with indication, where appropriate, of the relevant passages | Relevant to claim No. |
|---|---|---|
| X | CN 114069051 A (TIANJIN ZHONGDIAN NEW ENERGY RESEARCH INSTITUTE CO., LTD.) 18 February 2022 (2022-02-18) description, paragraphs [0004]-[0122] | 1-16 |
| X | CN 114156537 A (ZHUHAI COSMX BATTERY CO., LTD.) 08 March 2022 (2022-03-08) description, paragraphs [0003]-[0108] | 1-16 |
| A | CN 106207263 A (PANASONIC INTELLECTUAL PROPERTY MANAGEMENT CO., LTD.) 07 December 2016 (2016-12-07) entire document | 1-16 |
| A | CN 113299976 A (INSTITUTE OF PHYSICS, CHINESE ACADEMY OF SCIENCES) 24 August 2021 (2021-08-24) entire document | 1-16 |
| A | CN 114447333 A (TIANJIN ZHONGJIN NEW ENERGY RESEARCH INSTITUTE CO., LTD) 06 May 2022 (2022-05-06) entire document | 1-16 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 April 2023** | **28 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/122033**

| Patent document cited in search report | | | Publication date (day/month/year) | Patent family member(s) | | | Publication date (day/month/year) |
|---|---|---|---|---|---|---|---|
| CN | 114069051 | A | 18 February 2022 | None | | | |
| CN | 114156537 | A | 08 March 2022 | None | | | |
| CN | 106207263 | A | 07 December 2016 | US | 2016351960 | A1 | 01 December 2016 |
| | | | | US | 9929431 | B2 | 27 March 2018 |
| | | | | JP | 2016219420 | A | 22 December 2016 |
| | | | | JP | 6771144 | B2 | 21 October 2020 |
| | | | | CN | 106207263 | B | 15 January 2021 |
| CN | 113299976 | A | 24 August 2021 | None | | | |
| CN | 114447333 | A | 06 May 2022 | None | | | |

Form PCT/ISA/210 (patent family annex) (July 2022)